# EUROPÄISCHE PATENTSCHRIFT

(11) **EP 3 646 102 B1**
(45) Veröffentlichungstag und Bekanntmachung des Hinweises auf die Patenterteilung: **04.01.2023**
(21) Anmeldenummer: 18759856.0
(22) Anmeldetag: 25.07.2018
(51) Int. Cl.: G02B 27/00, G02B 7/02, G03B 17/55, H05B 3/14, H05B 3/84

(54) **KAMERAVORRICHTUNG, RÜCKBLICKVORRICHTUNG UND KRAFTFAHRZEUG**
CAMERA DEVICE, REAR VIEW DEVICE AND MOTOR VEHICLE
DISPOSITIF DE CAMÉRA, DISPOSITIF DE RÉTROVISEUR ET VÉHICULE

(30) Priorität: 28.07.2017 DE 102017117153
(43) Veröffentlichungstag der Anmeldung: 06.05.2020
(73) Patentinhaber: SMR Patents Sarl, 2453 Luxembourg (LU)
(72) Erfinder: WIECZOREK, Romeo, 70327 Stuttgart (DE)
(74) Vertreter: Weber-Bruls, Dorothée
(86) Internationale Anmeldenummer: PCT/EP2018/070224
(87) Internationale Veröffentlichungsnummer: WO 2019/020713

(56) Entgegenhaltungen:
- WO-A1-2016/105674
- DE-A1- 10 340 900
- US-A1- 2015 321 621
- US-B2- 9 623 799

## Beschreibung

Die Erfindung betrifft eine Kameravorrichtung sowie eine Rückblickvorrichtung und ein Kraftfahrzeug mit einer solchen Kameravorrichtung.

In modernen Kraftfahrzeugen finden zunehmend Kameras Anwendung, die dem Fahrer zusätzliche Informationen liefern oder Daten für Fahrerassistenzsysteme bereitstellen sollen. Dabei kann es sich um Frontsichtkameras, Rückblickkameras zum Ersatz von Rückspiegeln, Kameras zur Beobachtung eines toten Winkels eines anderen Rückblicksystems, Heckkameras oder dergleichen handeln.

Eine Rückblickvorrichtung für ein Kraftfahrzeug liefert ein mindestens den gesetzlichen Vorschriften entsprechendes Bild des hinteren Bereiches des Kraftfahrzeugs und gehört zu einer Untergruppe von Vorrichtungen für eine indirekte Sicht. Diese liefern Bilder und Ansichten von Objekten, die sich nicht im direkten Sichtfeld eines Fahrers befinden, das heißt in Richtungen entgegengesetzt, links, rechts, unterhalb und/oder oberhalb der Blickrichtung des Fahrers. Der Blick des Fahrers kann insbesondere auch in Blickrichtung nicht vollständig zufriedenstellend sein, zum Beispiel können sich Sichtbehinderungen durch Fahrzeugteile des eigenen Fahrzeuges, wie zum Beispiel durch Teile der Karosserie, insbesondere der A-Säule, der Dachkonstruktion und/oder der Motorhaube, und Sichtbehinderungen durch andere Fahrzeuge und/oder Gegenstände außerhalb des Fahrzeugs ergeben, die die Sicht derart behindern können, dass der Fahrer eine Fahrsituation nicht vollständig zufriedenstellend bzw. nur unvollständig erfassen kann. Außerdem ist es möglich, dass der Fahrer nicht in der Lage ist, die sich ihm in oder abseits der Blickrichtung präsente Situation so zu erfassen, wie es nötig wäre, um das Fahrzeug der Situation entsprechend zu kontrollieren. Daher kann eine Rückblickvorrichtung auch derart ausgestaltet sein, dass sie die Informationen entsprechend den Fähigkeiten des Fahrers aufbereitet, um ihm eine bestmögliche Erfassung der Situation zu ermöglichen.

Verschiedene Funktionen und Geräte können in Rückblickvorrichtungen eingebaut und/oder mit Hilfe von Rückblickvorrichtungen gesteuert werden, wobei insbesondere auch Kameras umfasst sind. Besonders nützlich sind Funktionen und Geräte zur Verbesserung, Erweiterung und/oder Aufrechterhaltung der Funktionalität der Rückblickvorrichtung bei normalen oder extremen Bedingungen. Hierbei können Heiz- und/oder Kühleinrichtungen, Reinigungsmittel wie Wischer, flüssige und/oder gasförmige Sprays, Aktuatormittel zum Bewegen der Rückblickvorrichtung oder Teile davon, wie beispielsweise eine Anzeige, ein Kamerasystem und/oder Teile von einem Kamerasystem, umfassend beispielsweise Linsen, Filter, Lichtquellen, adaptive Optiken wie zum Beispiel verformbare Spiegel, Sensoren und/oder Spiegel, und /oder Aktuatormittel zur Induktion von Bewegungen von anderen Objekten, beispielsweise Teile des Fahrzeugs und/oder Gegenstände, die das Fahrzeug umgeben, umfasst sein.

Weiterhin kann die Rückblickvorrichtung lineare Führungen und/oder rotierende Räder, wie beispielsweise ein Filterrad, zum Austauschen optischer Elemente, beispielsweise umfassend Linsen, Spiegel, Lichtquellen, Sensoren, adaptive Optiken wie verformbaren Spiegeln und/oder Filter, umfassen.

In Rückblickvorrichtungen können weitere Einrichtungen integriert sein, und/oder es können weitere Einrichtungen mit Hilfe von Rückblickvorrichtungen gesteuert werden, wie zum Beispiel jede Art von Lichtmodul, umfassend ein externes Lichtmodul, ein internes Lichtmodul, ein Frontlicht, ein Rücklicht, ein Nebelscheinwerfer, ein Bremslicht, ein Beschleunigungslicht, ein Blinklicht, ein Logolicht, eine Vorfeldbeleuchtung, ein Bodenlicht, ein Pfützenlicht, ein Blitzlicht, ein Navigationslicht, ein Positionslicht, ein Notlicht, ein Scheinwerfer, ein grünes Licht, ein rotes Licht, ein Warnlicht, ein Blinklicht-Lichtmodul, ein Annäherungslicht, ein Suchlicht, ein Informationslicht, eine Anzeige und/oder dergleichen. Weitere Beispiele für Funktionen und Vorrichtungen, die in Rückblickvorrichtungen integriert und/oder mit Hilfe von Rückblickvorrichtungen gesteuert werden, können beispielsweise ein Müdigkeits-Erkennungssystem, ein Sekundenschlaf-Erkennungssystem, ein Abstands- und/oder Geschwindigkeitsbestimmungssystem, beispielsweise ein LIDAR (Lichtdetektion und Abstandserfassung) System, ein Toter-Winkel-Indikationssystem, ein Spurwechsel-Assistenzsystem, ein Navigationsassistenzsystem, ein Tracking-Assistent-System, ein Mensch-Maschine-Interaktionssystem, ein Maschinen-Maschinen-Interaktionssystem, ein Not- und Vorsichtsmaßnahmen-Assistenzsystem, wie ein Unfallvermeidungs-Assistenzsystem, ein Gegenmaßnahmen-Assistenzsystem, ein Bremsassistenzsystem, ein Lenkassistenzsystem, ein Beschleunigungsassistenzsystem, ein Fluchtassistenzsystem, das beispielsweise ein Schleudersitzsystem umfasst, ein Richtungsanzeiger, ein Toter-Winkel-Indikator, ein Annäherungssystem, ein Notbremssystem, eine Ladestatusanzeige, ein Fahrzeugmodus System, das beispielsweise ein Sport-Modus System, ein Economy-Modus System, ein Autonomes-Fahr-Modus System, ein Schlaf-Modus System und/oder ein Anti-Diebstahl-System umfasst, ein Fahrzeug-Verschlossen Indikationssystem, eine Fahrzeug-Gestohlen Anzeige, ein Warnsignal-System, ein Temperatur-Indikator-System, eine Wetterindikationssystem, ein Ampel-Signalsystem, ein Kraftstoff-Statussystem und/oder beliebige Kombination davon umfassen.

Beleuchtungseinrichtungen für Rückblickvorrichtungen und/oder Lichtleiter dazu sind in der deutschen Patentanmeldung Nr. 102012108488, in der deutschen Patentanmeldung Nr. 102012104529, in der deutschen Patentanmeldung Nr. 102012107833, in der deutschen Patentanmeldung Nr. 102012107834, in dem europäischen Patent Nr. 2738043, in dem europäischen Patent Nr. 2947378, in der internationalen Patentanmeldung Nr. 2015/173695, in der europäischen Patentanmeldung Nr. 3045944, in der US-Patentanmeldung Nr. 15 / 228,566, in der US-Patentanmeldung Nr. 15 / 000,733, in der internationalen Patentanmeldung Nr. 2016/147154, in der US-Patentanmeldung Nr. 15 / 256,532, in der deutschen Patentanmeldung Nr. 102015115555, in der europäischen Patentanmeldung Nr. 3144183, der Anmelderin beschrieben.

Ein Kameramodul kann insbesondere eine Vielzahl von verschiedenen optischen Elementen, die unter anderem eine Vielzahl von verschiedenen Sensoren und Lichtquellen umfasst, sowie Gehäuseteilen aufweisen. Das Gehäuse eines Kameramoduls kann aus Kunststoff, Metall, Glas, einem anderen geeigneten Material und/oder aus einer beliebigen Kombination davon hergestellt sein und kann in Kombination mit den unten beschriebenen Techniken zum Ändern oder Modifizieren der Eigenschaften des Materials oder der Materialoberfläche verwendet werden. Gehäuse sind beispielsweise in der deutschen Patentanmeldung Nr. 102016108247.3 offenbart.

Die Kamera kann beispielsweise CCD- oder CMOS- oder Lichtfeldsensoren umfassen, wie sie beispielsweise in der deutschen Patentanmeldung Nr. 102011053999 und dem US-Patent Nr. 6,703,925 beschrieben sind. Auch kann ein Bereich des Sensors für verschiedene Zwecke reserviert werden, um beispielsweise einen Teststrahl zu detektieren, wie in dem US-Patent Nr. 8,031,224 offenbart.

Die optischen Elemente können aus irgendeiner Art von Glas oder irgendeinem anderen geeigneten Material geformt oder gestaltet sein. Glas wird hier im Sinne eines nichtkristallinen amorphen Festkörpers verwendet, der einen Glasübergang zeigt, wenn er in Richtung des flüssigen Zustandes erhitzt wird. Es umfasst beispielsweise die Gruppe der Polymergläser, Metallgläser, Siliziumdioxid-Gläser, aber auch jedes andere geeignete Material, das den Glasübergang zeigt, kann ebenfalls verwendet werden. Das Glas kann entweder flach, keilförmig, rechteckig, zylindrisch, sphärisch, konisch, elliptisch und/oder kreisförmig sein, wie es beispielsweise in der deutschen Patentanmeldung Nr. 102016108247.3 und der deutschen Patentanmeldung Nr. 102011103200 beschrieben ist, oder eine Form nach den unterschiedlichen Bedürfnissen oder Linsen-Typen haben. Als nicht einschränkende Beispiele können Kameramodule mit Linsen ausgerüstet werden, wie beispielsweise eine Weitwinkel- oder Fischaugenlinse, die geeignet ist, Peripheriebilder bereitzustellen, wie in der US-Patentanmeldung Nr. 15 / 281,780 und der US-Patentanmeldung Nr. 13 / 090,127 beschrieben, eine Fresnel-Linse oder Mikrolinsen, wie in der deutschen Patentanmeldung Nr. 102011053999 beschrieben, oder eine TIR (Total interne Reflexionslinse), wie in dem US-Patent Nr. 8,740,427 beschrieben. Eine andere Art von optischen Elementen, die bekanntermaßen in Kameramodulen verwendet werden, sind optische Fasern, insbesondere in Form von Faserbündeln und vorzugsweise in Form von Faserbündeln mit einem optischen Kopf, wie beispielsweise in der US-Patentanmeldung Nr. 09 / 771,140 beschrieben. Es können verschiedene Verfahren verwendet werden, um solche optischen Elemente herzustellen, wie beispielsweise das Verfahren, das in dem US-Patent 8,460,060 beschrieben wird. Die optischen Elemente können transparent sein, wie beispielsweise in dem US-Patent Nr. 8,031,224, der deutschen Patentanmeldung Nr. 102016108247.3 und der US-Patentanmeldung Nr. 13 / 242,829 beschrieben. Aber die optischen Elemente können auch semitransparent sein, wie in der US-Patentanmeldung Nr. 09 / 771,140 und der US-Patentanmeldung Nr. 13 / 090,127 beschrieben. Weiterhin können die optischen Elemente vollständig oder teilweise mit unterschiedlichen Arten von Beschichtungen beschichtet werden, um unterschiedliche Effekte zu realisieren, wie beispielsweise Antireflexionsbeschichtungen, siehe das US-Patent Nr. 8,031,224, Reflexionsbeschichtungen auf Chrombasis, siehe das US-Patent Nr. 9,181,616, und andere Beschichtungen, wie beispielsweise für polymerische Substrate in der US-Patentanmeldung Nr. 14 / 936,024 und in US-Patentanmeldung Nr. 15 / 124,310 beschrieben. Vorzugsweise bestehen die optischen Elemente aus einem kratzfesten Material, wie es beispielsweise in der deutschen Patentanmeldung Nr. 102016108247.3 beschrieben ist. Die optischen Elemente können an bestimmten Stellen der optischen Elemente Auskopplungsstrukturen aufweisen, und ein optischer Film, beispielsweise ein Extrusionsfilm, und eine geformte Beschichtung kann, wie in der deutschen Patentanmeldung Nr. 102011103200 beschrieben, aufgebracht werden. Eine Beschichtung zur Spektral- und Spannungskontrolle ist in der US-Patentanmeldung Nr. 15 / 124,310 beschrieben. Verschiedene Filter können in die optischen Elemente integriert werden, wie beispielsweise Graufilter oder Polarisationsfilter, die in der US-Patentanmeldung Nr. 14 / 809,509 beschrieben sind. Elektrochrome Substrate, Polymerelektrolyte und andere ladungsleitende Medien können für die optischen Elemente auf der Grundlage der Beschreibungen umfasst sein, wie in der europäischen Patentanmeldung Nr. 08103179.1, dem Europäisches Patent Nr. 2202826, dem US-Patent Nr. 7,999,992 und dem US Patent Nr. 8,537,451 offenbart.

Das Kameramodul kann auch mit Geräten zur Lichtintensitätsregulierung ausgestattet sein, wie beispielsweise in der US-Patent Anmeldung Nr. 14 / 809,509 beschrieben und Lichtpegelverstärkeröhren, wie in US Patentanmeldung Nr. 09 / 771,140 beschrieben, aufweisen. Die elektrochromen Substrate und Vorrichtungen, die in der europäischen Patentanmeldung Nr. 08103179.1, dem europäischen Patent Nr. 2202826, dem US-Patent Nr. 7,999,992 und dem US-Patent Nr. 8,537,451 verwendet werden, können auch für diesen Zweck verwendet werden, genauso wie ein Transflektor zum Transmittieren oder Reflektieren von Licht auf der Grundlage eines entsprechenden Eingangssignals, wie in der deutschen Patentanmeldung Nr. 102016106126.3 beschrieben.

Das Kameramodul oder eine an das Kameramodul angepasste Abdeckung kann mit verschiedenen Aktuatoren, Antrieben und/oder einer flexiblen Bahn bewegt werden, wie beispielsweise in der deutschen Anmeldung Nr. 102016108247.3 und der US-Patentanmeldung Nr. 15 / 281,780 beschrieben. Weiterhin kann das Kameramodul auch Reinigungselemente umfassen, um das nach außen zeigende und der Umwelt ausgesetzte optische Element zu reinigen. Das Reinigungselement kann beispielsweise Wischer, Bürsten, Lippen, Düsen, Ventilatoren und ähnliche Elemente enthalten, wie sie in der europäischen Patentanmeldung Nr. 14165197.6, der US-Patentanmeldung Nr. 15 / 281,780, der deutschen Patentanmeldung Nr. 102016108247.3, der europäischen Patentanmeldung Nr. 13163677.1, der europäische Patentanmeldung Nr. 15173201.3 und dem europäisches Patent Nr. 1673260 beschrieben sind. Die Reinigungsvorrichtungen sind in ihrer Zusammensetzung nicht beschränkt und können beispielsweise beliebige Gewebe, Elastomere, Schwämme, Bürsten oder Kombinationen davon umfassen. Spezielle Wischerelemente, die Wischerarme, Wischerblätter, Wischtücher, Wischgewebe und Kombinationen davon umfassen, sind in der europäischen Patentanmeldung Nr. 14165197.6 beschrieben. Ein Wischerelement kann beispielsweise nach dem in der europäischen Patentanmeldung Nr. 130164250.6 beschriebenen Verfahren gesteuert werden. Ein Reservoir zum Halten einer Reinigungsflüssigkeit, wie in der europäischen Patentanmeldung Nr. 14165197.6 beschrieben, kann an dem Kameramodul angebracht oder in dieses integriert sein, um die Reinigungsflüssigkeit den optischen Elementen des Kameramoduls zuzuführen.

Verschiedene Verfahren können verwendet werden, um Schmutz oder andere Trübungen zu erkennen, die das Funktionieren des Kameramoduls verhindern oder verschlechtern, wie es im US-Patent Nr. 8,395,514, dem europäischen Patent Nr. 1328141, und dem US-Patent Nr. 8,031,224 beschrieben ist. Auch können Lichtquellen in das Kameramodul eingebaut oder integriert werden, um die Sichtbarkeit von umgebenden Objekten zu erhöhen, Distanzen und Richtungen zu messen und Schmutz zu erkennen, wie in dem US-Patent Nr. 8,031,224, der US-Patentanmeldung Nr. 62 / 470,658 und der US-Patentanmeldung Nr. 09 / 771,140 beschrieben.

Es ist bekannt, Heizvorrichtungen für solche Kameras bzw. Schutzgläser bereitzustellen. Hierzu werden beispielsweise Heizfolien auf das Schutzglas geklebt oder mit diesem laminiert. Eine derartige Lösung ist aufwendig in der Herstellung und besitzt aufgrund der geringen thermischen Masse einer solchen Heizfolie nur eine geringe Heizleistung. Verschiedene Heizmittel wie Heizspulen, in den Linsenhalter oder der Einfassung integrierte Heizvorrichtungen oder andere Heizelemente können verwendet werden, um Kondensation und Vereisung an der Oberfläche von optischen Elementen zu verhindern, wie beispielsweise in der deutschen Patentanmeldung Nr. 102016108247.3 und der US-Patentanmeldung Nr. 62/470,658.

Wasserdichte Abdichtungen gegen Witterungseinflüsse sowie gegen den Einfluss von Waschprozessen mit Waschmitteln, Lösungsmitteln und Hochdruckreinigern können am Gehäuse des Kameramoduls verwendet werden, wie zum Beispiel in der US-Patentanmeldung Nr. 13 / 090,127 beschrieben. Alternativ kann das Gehäuse aus einem Körper hergestellt sein, der aus Kunststoff und leitfähigem Material besteht, wobei das leitfähige Material in dem Kunststoffmaterial verteilt ist, um eine leitfähige Masse zu bilden, um einer Stromquelle, vorzugsweise einer Gleichspannungsquelle, zu ermöglichen, über mindestens zwei Elektroden mit dem Körper eine Verbindung einzugehen und den Körper entsprechend zu erwärmen. Eine leitende Bahn kann in Kunststoffteile des Kameramoduls eingebettet sein, wie in dem europäischen Patent Nr. 1328141 und dem US-Patent Nr. 7,083,311 beschrieben.

Das Kameramodul kann ein Energiesammelsystem umfassen, wie es beispielsweise in der europäischen Patentanmeldung Nr. 09171683.7 beschrieben ist. Ein Fehlererkennungssystem für elektrische Verbraucher, wie es in dem US-Patent Nr. 8,487,633 beschrieben ist, kann verwendet werden, um einen Ausfall des Kameramoduls zu detektieren.

Verschiedene Arten von Befestigungen können verwendet werden, um das Kameramodul an dem Fahrzeug oder anderen Komponenten zu befestigen, wie beispielsweise die Schnappverbindung, die in dem europäische Patent Nr. 2233360 beschrieben.

Es können verschiedene Steuerungsmittel und Analysiervorrichtungen verwendet werden, wie beispielsweise die Berechnungseinheiten, die in der US-Patentanmeldung Nr. 13 / 090,127, der deutschen Patentanmeldung Nr. 102016106126.3, der deutschen Patentanmeldung Nr. 102011053999, der europäischen Patentschrift Nr. 2146325 und dem US-Patent Nr. 8,849,104 beschrieben. Zusätzlich kann die HDR-Technologie (Hoher Dynamikumfang) gemäß der US-Patentanmeldung Nr. 14 / 830,40, verwendet werden.

Bekannt ist aus der WO 2016/105674 A1 ein Heizsystem zum Entfernen von (gefrorener und flüssiger) Feuchtigkeit von einer Windschutzscheibe um einen Fahrzeug-Durchgangssensor herum, bereitstellend eine Kammer zwischen dem Sensor und der Windschutzscheibe, die Luft enthält, die durch ein von der Kammer getragenes Heizelement erwärmt werden kann. Die warme Luft in der Kammer erwärmt die Windschutzscheibe im kritischen Sichtbereich, ohne den Sensor zu behindern.

Aus der US 2015/321621 A1 ist ein Sichtsystem eines Fahrzeugs bekannt, umfassend eine Kamera, die an einem Fahrzeug angeordnet ist und ein Sichtfeld außerhalb des Fahrzeugs aufweist. Die Kamera enthält ein pixeliertes Abbildungsarray mit einer Vielzahl von Photosensorelementen. Die Kamera umfasst eine Linse mit mindestens einem optischen Element. Das mindestens eine optische Element umfasst Graphen, oder das mindestens eine optische Element weist an einer Oberfläche eine Graphenbeschichtung oder -spur auf, oder das mindestens eine optische Element weist eine transparente Abschirmung auf, die darauf angeordnet ist und Graphen oder eine Graphenbeschichtung oder -spur aufweist Mindestens ein optisches Element weist einen austauschbaren Schutzfilm oder ein austauschbares Schutzelement auf, das darauf angeordnet ist und Graphen oder eine Graphenbeschichtung oder -spur aufweist. Elektrische Leitungen werden verwendet, um Graphenspuren mit Strom zu versorgen oder zu versorgen, um das Vereisen oder Beschlagen des Kameraobjektivs zu begrenzen.

Die US 9,623,799 B2 beschreibt ein Kameramodul, das zur Verwendung für ein Sichtsystem eines Fahrzeugs geeignet ist, und einen Kameragehäuseabschnitt mit einem im Allgemeinen zylindrischen Abschnitt umfasst, der sich von einem Basisabschnitt nach außen erstreckt. Ein Abbildungssensor ist am Basisabschnitt angeordnet, und ein Linsensystem ist am zylindrischen Abschnitt des Kameragehäuseabschnitts aufgenommen. Der Kameragehäuseabschnitt und ein Verbinderabschnitt sind so konfiguriert, dass sie zusammengefügt werden, um den Bildsensor und die Schaltung zu umschließen. Der Verbinderabschnitt kann einen mehrpoligen Verbinder enthalten, der sich in einer Richtung weg von dem Kameragehäuseabschnitt erstreckt, wenn der Kameragehäuseabschnitt und der Verbinderabschnitt miteinander verbunden sind. Der mehrpolige Verbinder kann eine Vielzahl von Anschlüssen umfassen, von denen jeder ein erstes Ende mit einem Stift aufweist, der zum elektrischen Verbinden mit einem Verbinder eines Fahrzeugs konfiguriert ist, und ein gegenüberliegendes zweites Ende, das zum elektrischen Verbinden mit der Schaltung konfiguriert ist.

Die DE 103 40 900 beschreibt ein Kameramodul mit einer Linse, einem Auswertegerät und einer Deckscheibe, auf der sich eine elektrische Widerstandsheizung befindet, so dass der Strahlengang durch die Linse nicht beeinträchtigt wird. Vorzugsweise besteht die Widerstandsheizung aus mindestens einem Ring oder einem Abschnitt, der auf die Deckscheibe gedruckt und anschließend gesintert wird. Es können Heizdrähte verwendet werden, die in Klebefolie mit Scheibe aus Einscheiben-Sicherheitsglas oder Verbundschutzglas eingebettet sind. Die Heizleistung kann geregelt werden.

Es ist die Aufgabe der vorliegenden Erfindung, eine Kameravorrichtung bereitzustellen, die die Nachteile des Stands der Technik vermeidet. Insbesondere soll bei Einsatz als Außenkamera, vorzugsweise an einem Kraftfahrzeug, ein Beschlagen oder Vereisen eines Schutzglases zuverlässig vermieden werden, und gleichzeitig soll die Kameravorrichtung einfach und kostengünstig in der Herstellung sein.

Diese Aufgabe wird durch eine Kameravorrichtung entsprechend des unabhängigen Anspruchs gelöst. Die Kameravorrichtung ist mit einem Gehäuse versehen in dem zumindest ein Kameramodul zumindest teilweise angeordnet ist und das zumindest ein Lichtfenster im Strahlengang des Kameramoduls trägt, wobei zumindest ein Luftraum zwischen dem Lichtfenster und dem Kameramodul in dem Gehäuse angeordnet ist, und das Gehäuse einen elektrisch leitfähigen Kunststoff aufweist, der bei Beaufschlagung mit Strom das Lichtfenster und/oder den Luftraum aufheizt. Hierbei wird der Luftraum sich vom Lichtfenster aus, in zumindest einer Schnittebene, konisch verjüngend von dem Gehäuse bereitgestellt.

Das Gehäuse ist erfindungsgemäß aus einem Kunststoff mit einem elektrisch leitfähigen Zuschlag hergestellt sein, und der Füllgrad des Zuschlags ist in zumindest einem ersten Teilbereich größer als in zumindest einem zweiten Teilbereich, wobei vorzugsweise der Zuschlag Graphit und/oder Kohlefasern umfasst. Zudem kann das Gehäuse als Spritzgussbauteil, insbesondere als Zweikomponenten-Spritzgussbauteil, ausgebildet sein.

Gemäß der Erfindung ist bevorzugt, dass das Lichtfenster ein Schutzglas ist, das vorzugsweise das Gehäuse zumindest auf einer dem Kameramodul gegenüberliegenden Seite, insbesondere dicht, verschliesst. Ein Verbindungsbereich, insbesondere ein Klebebereich, zwischen dem Gehäuse und dem Lichtfenster, insbesondere dem Schutzglas, kann bzw. können im zweiten Teilbereich angeordnet sein. Die Dichtung kann dabei mit dem Gehäuse fest verbunden sein, insbesondere in einem 2-K-Spritzverfahren hergestellt, oder aber die Dichtung kann mit dem Gehäuse über eine Schnapp- und/oder Rastverbindung, insbesondere lösbar, verbunden sein. Bevorzugt es ferner, dass das Schutzglas mit dem Gehäuse und/oder der Dichtung über eine Schnapp- und/oder Rastverbindung, insbesondere lösbar, verbunden ist, und/oder das Gehäuse zum Halten des Schutzglases zumindest einen Hinterschnitt und/oder zumindest ein Clipselement bereitstellt.

Auch kann zumindest eine Linse im Strahlengang des Kameramodules in dem Gehäuse angeordnet sein. Dabei kann die Linse im Strahlengang des Kameramodules vor dem Luftraum angeordnet sein.

Ausführungsformen der Erfindung sind auch dadurch gekennzeichnet, dass eine Stromversorgung zum Beaufschlagen des elektrisch leitfähigen Kunststoffes, insbesondere durch Beaufschlagen des ersten Teilbereichs des Gehäuses, mit elektrischem Strom vorgesehen ist. Dabei kann vorgesehen sein, dass die Stromversorgung zum Bereitstellen eines pulsweitenmodulierten Stroms ausgelegt ist, oder eine Steuereinrichtung mit der Stromversorgung für eine pulsweitenmodulierte Steuerung verbunden ist.

Ferner kann zumindest eine Sensoreinrichtung zum Bestimmen der Temperatur, insbesondere des Lichtfensters und/oder des Luftraums, vorgesehen sein, vorzugsweise in Wirkverbindung mit der Stromversorgung und/oder der Steuereinrichtung. Bevorzugt ist, dass der Wärmeeintrag in das Lichtfenster und/oder den Luftraum über den Widerstand des elektrischen leitfähigen Kunststoffes und/oder des Gehäuses, insbesondere des ersten Teilbereichs des Gehäuses, bestimmbar und/oder zur Steuerung der Stromversorgung heranziehbar ist. Als vorteilhaft hat sich herausgestellt, dass über die Stromversorgung und/oder die Steuereinrichtung ein temperaturabhängiger Innenwiderstand des Gehäuses, insbesondere des ersten Teilbereichs des Gehäuses, bestimmbar ist, und das Gehäuse, insbesondere der erste Teilbereich des Gehäuses, in Abhängigkeit von dem bestimmten Innenwiderstand mit elektrischem Strom beaufschlagbar ist. Weiterhin ist bevorzugt, dass zumindest eine Streulichtblende von dem Gehäuse, insbesondere durch die Begrenzung des Luftraums, bereitgestellt ist.

Eine erfindungsgemäße Kameravorrichtung ist insbesondere als Außenkamera für ein Kraftfahrzeug ausgebildet und umfasst ein Objektiv und ein im Strahlengang eines Kameramoduls vor dem Objektiv angeordnetes Schutzglas, welches von einem Gehäuse gehalten wird, das wiederum einen abgeschlossenen Luftraum zwischen dem Objektiv und dem Schutzglas ausbildet, wobei das Gehäuse zumindest teilweise durch einen elektrisch leitfähigen Kunststoff gebildet ist.

Da der elektrisch leitfähige Kunststoff wie jeder Leiter einen gegebenen Innenwiderstand aufweist, entsteht bei Bestromung des elektrisch leitfähigen Kunststoffs Verlustwärme. Damit kann also das Gehäuse selbst als Heizelement genutzt werden, um das Schutzglas vor Beschlag und Vereisung zu schützen. Zusätzliche Heizfolien oder ähnliche Heizelemente sind nicht notwendig, so dass die erfindungsgemäße Kameravorrichtung besonders einfach und kostengünstig in der Herstellung ist. Der elektrisch leitfähige Kunststoff weist zudem eine größerer thermische Masse auf als übliche Heizfolien, so dass eine besonders gute Heizleistung erzielt wird und eine gewünschte Temperatur besonders lange gehalten werden kann. Zudem erwärmt sich bei Bestromung des elektrisch leitfähigen Kunststoffs auch die Luft im Luftraum, so dass eine besonders gleichmäßige und schonende Erwärmung des Schutzglases erzielt wird.

Wenn das Gehäuse zumindest einen ersten Teilbereich aus einem elektrisch leitfähigen Kunststoff und zumindest einen zweiten Teilbereich aus einem elektrisch nicht leitfähigen Kunststoff umfasst, kann die Wärmeverteilung im Gehäuse bei Bestromung besonders gut eingestellt werden und die Wärmeerzeugung von thermisch empfindlichen Bauteilen der Kameravorrichtung getrennt werden.

Wenn das Gehäuse zumindest einen ersten Teilbereich aus einem Kunststoff mit einem elektrisch leitfähigen Zuschlag und zumindest einen zweiten Teilbereich aus einem Kunststoff mit einem elektrisch leitfähigen Zuschlag aufweist, wobei ein Füllgrad des Zuschlags im ersten Teilbereich größer als im zweiten Teilbereich ist, kann die Wärmeverteilung im Gehäuse nach Bedarf eingestellt werden. Durch die Verwendung von Kunststoffen mit unterschiedlichem Zuschlagsfüllgrad können zudem auch Gradienten im Innenwiderstand und damit der Wärmeerzeugung verwirklicht werden, was eine besonders präzise Kontrolle der Wärmeverteilung ermöglicht. Ein solches Gehäuse kann vorteilhafterweise auch in einem einzigen Spritzgussschritt erzeugt werden, wenn das Zuschlagmaterial während der Zufuhr der Spritzgussmasse in variablem Ausmaß zugemischt wird.

Es ist bevorzugt, dass der Zuschlag Graphit und/oder Kohlefasern umfasst. Derartige Zuschläge vermischen sich besonders gut mit üblichen Kunststoffmaterialien und stellen die gewünschte Leitfähigkeit in einstellbarem Ausmaß zur Verfügung. Selbstverständlich ist auch die Verwendung anderer Zuschlagmaterialien oder auch Mischungen mit intrinsisch leitfähigen Kunststoffen wie PEDOT:PSS möglich, solange die gewünschte Leitfähigkeit erzielt wird.

Wenn ein Verbindungsbereich, insbesondere ein Klebebereich, zwischen dem Gehäuse und dem Schutzglas im zweiten Teilbereich angeordnet ist, der keine oder eine nur geringe Leitfähigkeit aufweist, entsteht bei Bestromung des Gehäuses dort auch weniger Wärme. Damit wird die empfindliche Klebestelle vor Wärmeeinfluß geschützt, während das Schutzglas selbst durch Strahlungswärme aus dem ersten Teilbereich und durch die Erwärmung des Luftraums zuverlässig beheizt werden kann.

Das Gehäuse als Spritzgussbauteil, insbesondere als Zweikomponenten-Spritzgussbauteil, auszubilden ermöglicht eine besonders einfache Herstellung des Gehäuses. Beim Spritzguss können sowohl Gradienten von Zuschlagmaterialien als auch ein Aufbau des Gehäuses aus bereichsweise vollständig verschiedenen Materialien verwirklicht werden; letzteres in der an sich bekannten Zweikomponententechnik.

Wenn der Luftraum konisch ausgebildet ist und sich vom Objektiv zum Schutzglas hin erweitert, entspricht der Luftraum in seiner Form in etwa dem Strahlengang vom Kameramodul außerhalb des Objektivs. Dies hält den Luftraum vergleichsweise klein, so dass er sich schnell erwärmen kann. Gleichzeitig ermöglicht dies eine hohe Wandstärke des Gehäuses im Bereich des Objektivs, die mit einer hohen thermischen Masse einhergeht, so dass das Gehäuse eine einmal eingestellte Temperatur besonders gut hält.

Wenn eine Stromversorgung zum Beaufschlagen des zumindest einen leitfähigen Teilbereichs des Gehäuses mit elektrischem Strom vorgesehen ist, kann die Stromversorgung in die Kameravorrichtung integriert sein, oder auch als externes Modul bereitgestellt werden. Es ist dabei bevorzugt, wenn die Stromversorgung zum Bereitstellen eines pulsweitenmodulierten Stroms ausgelegt ist. Hierdurch wird eine besonders genaue Kontrolle der Bestromung des leitfähigen Kunststoffs ermöglicht, die schnell und einfach an einen veränderten Wärmebedarf angepasst werden kann.

Wenn die Stromversorgung ein Steuergerät umfasst, welches dazu ausgelegt ist, einen temperaturabhängigen Innenwiderstand des zumindest einen leitfähigen Teilbereichs des Gehäuses zu bestimmen und den zumindest einen leitfähigen Teilbereich in Abhängigkeit von dem gemessenen Innenwiderstand mit elektrischem Strom zu beaufschlagen, kann der zumindest eine leitfähige Teilbereich des Gehäuses selbst benutzt werden, um dessen Temperatur zu bestimmen. Hierdurch kann auf zusätzliche Temperatursensoren verzichtet werden, was eine solche Kameravorrichtung besonders einfach und kostengünstig in der Fertigung macht. Durch die geringe Anzahl an benötigten Komponenten ist eine solche Kameravorrichtung zudem besonders ausfallsicher.

Die Erfindung liefert auch eine Rückblickvorrichtung für ein Kraftfahrzeug sowie auch ein Kraftfahrzeug mit zumindest einer erfindungsgemäßen Kameravorrichtung.

Nachfolgend werden bevorzugte Ausführungsformen der vorliegenden Erfindung unter Bezug auf eine schematische Zeichnung näher erläutert.

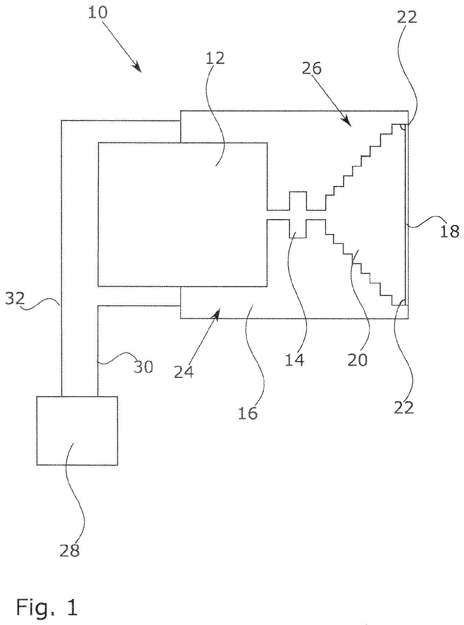

Fig. 1 zeigt eine schematische Darstellung eines Ausführungsbeispiels einer erfindungsgemäßen Kamera zeigt.

Eine im Ganzen mit 10 bezeichnete Kameravorrichtung, insbesondere in Form einer Außenkamera für ein Kraftfahrzeug, ist in Figur 1 dargestellt. Sie umfasst das eigentliche Kameramodul 12 mit seiner Bilderfassungseinrichtung und ein Objektiv 14. Ein Gehäuse 16 umschließt zumindest Teile des Kameramoduls 12 und das Objektiv 14. Das Gehäuse 16 trägt ferner ein Schutzglas 18, welches das Kameramodul 12 und das Objektiv 14 vor Umwelteinflüssen schützt. Zwischen Objektiv 14 und Schutzglas 18 ist in dem Gehäuse 16 ein Luftraum 20 ausgebildet, der sich vom Objektiv 14 hin zum Schutzglas 18 konisch erweitert. Die Seitenwände des Luftraums 20 dienen dabei gleichzeitig als Streulichtblenden. Das Schutzglas 18 ist mit dem Gehäuse 16 über eine Klebenaht 22 verbunden.

Ein erster Teilbereich 24 des Gehäuses 16 ist aus einem leitfähigen Kunststoff gefertigt. Ein zweiter Teilbereich 26 des Gehäuses besteht aus einem Kunststoff, der eine geringere Leitfähigkeit aufweist als derjenige des ersten Teilbereichs 24. Die Leitfähigkeit der Teilbereiche 24, 26 erfolgt dabei durch unterschiedliche Beimengungen von Zuschlagstoffen wie Graphit oder Kohlefasern zu der zur Herstellung verwendeten Kunststoffmasse. Der zweite Teilbereich kann dabei auch gänzlich isolierend sein.

Zur Herstellung des Gehäuses 16 mit den beiden Teilbereichen 24, 26 kann beispielsweise ein Zweikomponentenspritzgussverfahren verwendet werden. Hierbei wird zunächst einer der Teilbereiche 24, 26 gespritzt und nach Umkonfiguration des Werkzeugs, beispielsweise durch Versetzen eines Schiebers, der andere Teilbereich 24, 26 angespritzt, so dass die Herstellung des Gehäuses 16 besonders einfach und kostengünstig ist.

Mittels einer Stromquelle 28, die über Leitungen 30, 32 mit dem Gehäuse 16 verbunden ist, kann das Gehäuse 16 bestromt werden. Da der leitfähige Kunststoff einen Innenwiderstand aufweist, entsteht dabei Wärme. Diese strahlt über die Gehäusewandung in den Luftraum 20 ab und erwärmt somit indirekt das Schutzglas 18, so dass Beschlag oder Vereisung vom Schutzglas 18 vermieden bzw. entfernt werden kann.

Da der zweite Teilbereich 26 des Gehäuses 16 eine nur geringe oder gar keine Leitfähigkeit aufweist, fließt der bereitgestellte Strom bevorzugt durch den ersten Teilbereich 24. Im zweiten Teilbereich 26 erwärmt sich das Gehäuse 16 daher nur wenig. Dies schont die gegebenenfalls wärmeempfindliche Klebenaht 22.

Um die Beheizung des Gehäuses 16 präzise steuern zu können, ist die Stromquelle 28 bevorzugt dazu ausgelegt, einen pulsweitenmodulierten Strom bereitzustellen. Die Heizleistung kann somit über das Tastverhältnis des Stroms eingestellt werden.

Mittels der Stromquelle 28 und deren zugeordneter Steuerungselektronik kann zudem der Innenwiderstand des Gehäuses 16 gemessen werden. Dieser ist temperaturabhängig, so dass die Gehäusetemperatur bestimmt werden kann ohne dass zusätzliche Sensoren notwendig sind. Diese Temperaturinformation kann in die Steuerung der Stromquelle 28 einfließen, so dass die Temperatur des Gehäuses 16 und damit auch des Schutzglases 18 genau geregelt werden kann.

Insgesamt wird so eine Kameravorrichtung 10 erhalten, die mit geringem Aufwand zuverlässig vor Beschlag und Vereisung geschützt werden kann.

Die in der voranstehenden Beschreibung, in den Zeichnungen sowie in den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

### Bezugszeichenliste

- 10: Kamera
- 12: Kameramodul
- 14: Objektiv
- 16: Gehäuse
- 18: Schutzglas
- 20: Luftraum
- 22: Klebenaht
- 24: Erster Teilbereich
- 26: Zweiter Teilbereich
- 28: Stromquelle
- 30: Leitung
- 32: Leitung

## Patentansprüche

1. Kameravorrichtung (10) mit einem Gehäuse (16), in dem zumindest ein Kameramodul (12) zumindest teilweise angeordnet ist und das zumindest ein Lichtfenster im Strahlengang des Kameramoduls (12) trägt, wobei
zumindest ein Luftraum (20) zwischen dem Lichtfenster und dem Kameramodul (12) in dem Gehäuse (16) angeordnet ist, und
das Gehäuse (16) einen elektrisch leitfähigen Kunststoff aufweist, der bei Beaufschlagung mit Strom das Lichtfenster und/oder den Luftraum (20) aufheizt, wobei der Luftraum (20) sich vom Lichtfenster aus, in zumindest einer Schnittebene, konisch verjüngend von dem Gehäuse (16) bereitgestellt ist, **dadurch gekennzeichnet, dass** das Gehäuse (16) aus einem Kunststoff mit einem elektrisch leitfähigen Zuschlag hergestellt ist, und der Füllgrad des Zuschlags in zumindest einem ersten Teilbereich (24) größer als in zumindest einem zweiten Teilbereich (26) ist,
wobei vorzugsweise der Zuschlag Graphit und/oder Kohlefasern umfasst.

2. Kameravorrichtung (10) nach Anspruch 1, **dadurch gekennzeichnet, dass** das Gehäuse (16) als Spritzgussbauteil, insbesondere als Zweikomponenten-Spritzgussbauteil, ausgebildet ist.

3. Kameravorrichtung (10) nach Ansprüche 1 oder 2, **dadurch gekennzeichnet, dass** das Lichtfenster ein Schutzglas (18) ist, das vorzugsweise das Gehäuse (16) zumindest auf einer dem Kameramodul (12) gegenüberliegenden Seite, insbesondere dicht, verschliesst.

4. Kameravorrichtung (10) nach einem der vorherhergehenden Ansprüche, **dadurch gekennzeichnet, dass**
ein Verbindungsbereich, insbesondere ein Klebebereich (22), und/oder eine Dichtung zwischen dem Gehäuse (16) und dem Lichtfenster, insbesondere dem Schutzglas (18), im zweiten Teilbereich (26) angeordnet ist.

5. Kameravorrichtung (10) nach Anspruch 4, **dadurch gekennzeichnet, dass**
die Dichtung mit dem Gehäuse (16) fest verbunden ist, insbesondere in einem 2-K-Spritzverfahren hergestellt, oder
die Dichtung mit dem Gehäuse (16) über eine Schnapp- und/oder Rastverbindung, insbesondere lösbar, verbunden ist.

6. Kameravorrichtung (10) nach Anspruch 4 oder 5, **dadurch gekennzeichnet, dass** das Schutzglas (18) mit dem Gehäuse (16) und/oder der Dichtung über eine Schnapp- und/oder Rastverbindung, insbesondere lösbar, verbunden ist, und/oder das Gehäuse (16) zum Halten des Schutzglases (18) zumindest einen Hinterschnitt und/oder zumindest ein Clipselement bereitstellt.

7. Kameravorrichtung (10) nach einem der vorhergehenden Ansprüche, **dadurch gekennzeichnet, dass**
zumindest eine Linse (14) im Strahlengang des Kameramodules (12) in dem Gehäuse (16) angeordnet ist.

8. Kameravorrichtung (10) nach Anspruch 7, **dadurch gekennzeichnet, dass** die Linse (14) im Strahlengang des Kameramodules (12) vor dem Luftraum (20) angeordnet ist.

9. Kameravorrichtung (10) nach einem der vorhergehenden Ansprüche, **dadurch gekennzeichnet, dass**
eine Stromversorgung (28) zum Beaufschlagen des elektrisch leitfähigen Kunststoffes, insbesondere durch Beaufschlagen des ersten Teilbereichs (24) des Gehäuses (16), mit elektrischem Strom vorgesehen ist.

10. Kameravorrichtung (10) nach Anspruch 9, **dadurch gekennzeichnet, dass** die Stromversorgung (28) zum Bereitstellen eines pulsweitenmodulierten Stroms ausgelegt ist, oder eine Steuereinrichtung mit der Stromversorgung (28) für eine pulsweitenmodulierte Steuerung verbunden ist.

11. Kameravorrichtung (10) nach einem der vorhergehenden Ansprüche, **dadurch gekennzeichnet, dass**
zumindest eine Sensoreinrichtung zum Bestimmen der Temperatur, insbesondere des Lichtfensters und/oder des Luftraums (20), vorgesehen ist, vorzugsweise in Wirkverbindung mit der Stromversorgung (28) und/oder der Steuereinrichtung.

12. Kameravorrichtung (10) nach einem der vorhergehenden Ansprüche, **dadurch gekennzeichnet, dass**
der Wärmeeintrag in das Lichtfenster und/oder den Luftraum (20) über den Widerstand des elektrischen leitfähigen Kunststoffes und/oder des Gehäuses (16), insbesondere des ersten Teilbereichs (24) des Gehäuses (16), bestimmbar und/oder zur Steuerung der Stromversorgung (28) heranziehbar ist.

13. Kameravorrichtung (10) nach einem der Ansprüche 8 bis 10, **dadurch gekennzeichnet, dass**
über die Stromversorgung (28) und/oder die Steuereinrichtung ein temperaturabhängiger Innenwiderstand des Gehäuses (16), insbesondere des ersten Teilbereichs (24) des Gehäuses (16), bestimmbar ist, und das Gehäuse (16), insbesondere der erste Teilbereich (24) des Gehäuses (16), in Abhängigkeit von dem bestimmten Innenwiderstand mit elektrischem Strom beaufschlagbar ist.

14. Kameravorrichtung (10) nach einem der vorhergehenden Ansprüche, **dadurch gekennzeichnet, dass**
zumindest eine Streulichtblende von dem Gehäuse (16), insbesondere durch die Begrenzung des Luftraums (20), bereitgestellt ist

15. Rückblickvorrichtung für ein Kraftfahrzeug mit zumindest einer Kameravorrichtung (10) nach einem der vorhergehenden Ansprüche.

16. Kraftfahrzeug mit zumindest einer Kameravorrichtung (10) nach einem der Ansprüche 1 bis 14.

## Claims

1. A camera device (10) including a housing (16) in which at least one camera module (12) is at least partially arranged and which carries at least one light window in the beam path of the camera module (12), wherein
at least one air chamber (20) is arranged between the light window and the camera module (12) in the housing (16), and
the housing (16) comprises an electroconductive plastic that heats the light window and/or the air chamber (20) when current is applied thereto, wherein the air chamber (20) being provided by the housing (16) so that it conically tapers away from the light window outwards in at least one cutting plane, **characterized in that** the housing (16) is manufactured from a plastic having an electroconductive additive, and the filling degree of the additive in at least one first partial region (24) is greater than in at least one second partial region (26),
wherein the additive preferably comprises at least one of graphite and carbon fibers.

2. The camera device (10) according to Claim 1, **characterized in that**
the housing (16) is configured as an injection-molded part, in particular as a two-component injection-molded part.

3. The camera device (10) according to Claim 1 or 2, **characterized in that**
the light window is a protective glass (18) which preferably seals, in particular in an impervious manner, the housing (16) at least on a side opposite the camera module (12).

4. The camera device (10) according to any one of the preceding claims, **characterized in that**
a connecting region, in particular an adhesive region (22), and/or a seal between the housing (16) and the light window, in particular the protective glass (18), is arranged in the second partial region (26).

5. The camera device (10) according to Claim 4, **characterized in that**
the seal is fixedly connected to the housing (16), in particular manufactured using a two-component injection-molding process, or
the seal is connected, in particular detachably, to the housing (16) using at least one of a snap-in and latching connection.

6. The camera device (10) according to Claim 4 or 5, **characterized in that**
the protective glass (18) is connected, in particular detachably, to the housing (16) and/or the seal using at least one of a snap-in and latching connection, and/or
the housing (16) provides one or more of at least an undercut and at least a clip element for holding the protective glass (18).

7. The camera device (10) according to any one of the preceding claims, **characterized in that**
at least one lens (14) is arranged in the beam path of the camera module (12) in the housing (16).

8. The camera device (10) according to Claim 7, **characterized in that**
the lens (14) is arranged in the beam path of the camera module (12) in front of the air chamber (20).

9. The camera device (10) according to any one of the preceding claims, **characterized in that**
a power supply (28) is provided in order to apply electrical current to the electroconductive plastic, in particular by applying electrical current to the first partial region (24) of the housing (16).

10. The camera device (10) according to Claim 9, **characterized in that**
the power supply (28) is designed to provide a pulse-width modulated current, or a control apparatus is connected to the power supply (28) for a pulse-width modulated control.

11. The camera device (10) according to any one of the preceding claims, **characterized in that**
at least one sensor apparatus is provided in order to determine the temperature, in particular of the light window and/or the air chamber (20), preferably in operative connection with the power supply (28) and/or the control apparatus.

12. The camera device (10) according to any one of the preceding claims, **characterized in that**
the heat input into the light window and/or the air chamber (20) can be determined using the resistance of the electroconductive plastic and/or the housing (16), in particular of the first partial region (24) of the housing (16), and/or can be utilized in order to control the power supply (28).

13. The camera device (10) according to any one of Claims 8 to 10, **characterized in that** a temperature-dependent internal resistance of the housing (16), in particular of the first partial region (24) of the housing (16), can be determined using the power supply (28) and/or the control apparatus, and electrical current can be applied to the housing (16), in particular to the first partial region (24) of the housing (16), as a function of the determined internal resistance.

14. The camera device (10) according to any one of the preceding claims, **characterized in that**
at least one lens hood is provided by the housing (16), in particular by the boundary structure of the air chamber (20).

15. A rear-view device for a motor vehicle including at least one camera device (10) according to any one of the preceding claims.

16. A motor vehicle including at least one camera device (10) according to any one of Claims 1 to 14.

## Revendications

1. Dispositif de caméra (10) comprenant un boîtier (16), dans lequel au moins un module de caméra (12) est disposé au moins partiellement et porte l'au moins une fenêtre lumineuse dans le trajet de faisceau du module de caméra (12), dans lequel
au moins une cavité d'air (20) est disposée entre la fenêtre lumineuse et le module de caméra (12) dans le boîtier (16), et
le boîtier (16) présente une matière plastique électriquement conductrice qui chauffe la fenêtre lumineuse et/ou la cavité d'air (20) lors de l'alimentation du courant, la cavité d'air (20) étant fournie par le boîtier (16) en rétrécissant de manière conique à partir de la fenêtre lumineuse dans au moins un plan d'intersection, **caractérisé en ce que** le boîtier (16) est fabriqué à partir d'une matière plastique dotée d'une charge électriquement conductrice, et le degré de remplissage de la charge dans au moins une première zone partielle (24) est plus grand que dans au moins une seconde zone partielle (26),
dans lequel la charge comprend de préférence du graphite et/ou des fibres de carbone.

2. Dispositif de caméra (10) selon la revendication 1, **caractérisé en ce que**
le boîtier (16) est formé à partir d'un élément moulé par injection, en particulier d'un élément à deux composants moulé par injection.

3. Dispositif de caméra (10) selon la revendication 1 ou 2, **caractérisé en ce que**
la fenêtre lumineuse est une vitre de sécurité (18) qui obstrue de préférence, en particulier de manière étanche, le boîtier (16) au moins sur un côté opposé au module de caméra (12).

4. Dispositif de caméra (10) selon une des revendications précédentes, **caractérisé en ce qu'**
une zone de liaison, en particulier une zone de collage (22), et/ou un joint d'étanchéité entre le boîtier (16) et la fenêtre lumineuse, en particulier la vitre de sécurité (18), est disposée dans la seconde zone partielle (26).

5. Dispositif de caméra (10) selon la revendication 4, **caractérisé en ce que**
le joint d'étanchéité est solidaire du boîtier (16), en particulier est fabriqué dans un procédé d'injection 2 K, ou
le joint d'étanchéité est relié au boîtier (16), en particulier de manière amovible, par le biais d'une liaison par encliquetage et/ou par verrouillage.

6. Dispositif de caméra (10) selon la revendication 4 ou 5, **caractérisé en ce que**
la vitre de sécurité (18) est reliée au boîtier (16) et/ou au joint d'étanchéité, en particulier de manière amovible, par le biais d'une liaison par encliquetage et/ou par verrouillage, et/ou
le boîtier (16) fournit au moins une contre-dépouille et/ou au moins un élément de clip pour maintenir la vitre de sécurité (18).

7. Dispositif de caméra (10) selon une des revendications précédentes, **caractérisé en ce qu'**
au moins une lentille (14) est disposée dans le trajet de faisceau du module de caméra (12) dans le boîtier (16).

8. Dispositif de caméra (10) selon la revendication 7, **caractérisé en ce que**
la lentille (14) est disposée dans le trajet de faisceau du module de caméra (12) en amont de la cavité d'air (20).

9. Dispositif de caméra (10) selon une des revendications précédentes, **caractérisé en ce qu'**
une alimentation en courant (28) est prévue pour alimenter en courant électrique la matière plastique électriquement conductrice, en particulier en alimentant la première zone partielle (24) du boîtier (16).

10. Dispositif de caméra (10) selon la revendication 9, **caractérisé en ce que**
l'alimentation en courant (28) est conçue pour alimenter un courant à modulation d'impulsions en durée, ou un moyen de commande est relié à l'alimentation en courant (28) pour une commande de modulation d'impulsions en durée.

11. Dispositif de caméra (10) selon une des revendications précédentes, **caractérisé en ce qu'**
au moins un moyen de capteur est prévu pour définir la température, en particulier de la fenêtre lumineuse et/ou de la cavité d'air (20), de préférence en liaison fonctionnelle avec l'alimentation en courant (28) et/ou le moyen de commande.

12. Dispositif de caméra (10) selon une des revendications précédentes, **caractérisé en ce que**
l'introduction de chaleur dans la fenêtre lumineuse et/ou la cavité d'air (20) peut être définie par le biais de la résistance de la matière plastique électriquement conductrice et/ou du boîtier (16), en particulier de la première zone partielle (24) du boîtier (16), et/ou peut être utilisée pour commander l'alimentation en courant (28).

13. Dispositif de caméra (10) selon une des revendications 8 à 10, **caractérisé en ce qu'** il est possible, par le biais de l'alimentation en courant (28) et/ou du moyen de commande, de définir une résistance intérieure en fonction de la température du boîtier (16), en particulier de la première zone partielle (24) du boîtier (16), et le boîtier (16), en particulier la première zone partielle (24) du boîtier (16), peut être alimentée en courant électrique en fonction de la résistance intérieure définie.

14. Dispositif de caméra (10) selon une des revendications précédentes, **caractérisé en ce qu'**
au moins un pare-soleil est fourni par le boîtier (16), en particulier par la délimitation de la cavité d'air (20).

15. Dispositif de rétroviseur pour un véhicule comprenant au moins un dispositif de caméra (10) selon une des revendications précédentes.

16. Véhicule comprenant au moins un dispositif de caméra (10) selon une des revendications 1 à 14.
